# FASCICULE DE BREVET EUROPEEN

(11) **EP 1 043 205 B1**
(45) Date de publication et mention de la délivrance du brevet: **27.08.2003**
(21) Numéro de dépôt: 00400904.9
(22) Date de dépôt: 03.04.2000
(51) Int. Cl.: B60R 25/10

(54) **Système d'accès à un véhicule automobile, équipé d'un dispositif d'identification et d'un identifiant à télécommande**
Zugangssystem zu einem Auto, ausgestattet mit einer Identifikationsvorrichtung und einem Fernbedienungsidentifizierer
Access system for a car, equipped with an identification device and a remote control identifier

(30) Priorité: 06.04.1999 FR 9904243
(43) Date de publication de la demande: 11.10.2000
(73) Titulaire: VALEO SECURITE HABITACLE, 94000 Créteil (FR)
(72) Inventeur: Baudard, Xavier, 75016 Paris (FR); Haydar, Aham, 93230 Romainville (FR)
(74) Mandataire: Hervouet, Sylvie

(56) Documents cités:
- US-A- 5 146 215

## Description

La présente invention concerne un système d'accès dit "mains libres" pour un véhicule automobile, comportant un dispositif d'identification installé sur le véhicule et au moins un identifiant à télécommande porté par un utilisateur. US-A-5 146 215 montre les caractéristiques du préambule de la revendication 1.

Dans un tel système, un échange à distance de données s'établit entre le dispositif d'identification et l'identifiant pour commander des moyens de verrouillage des ouvrants du véhicule, lorsque le dispositif d'identification a authentifié l'identifiant. Dans ce type de système, l'utilisateur, pour obtenir l'accès, doit, tout d'abord, faire débuter une opération d'identification. Le démarrage de l'opération peut être obtenu, par exemple, par action sur un bouton ou une touche d'un boîtier de télécommande incorporant l'identifiant.

Toutefois, un même dispositif d'identification est généralement associé à plusieurs identifiants destinés à plusieurs utilisateurs, de sorte qu'il est possible que l'un des identifiants soit perdu ou volé, permettant ainsi à un tiers non autorisé d'accéder au véhicule.

L'invention a pour but d'éviter l'inconvénient susmentionné et de proposer un système d'accès à un véhicule automobile, qui soit simple et efficace.

A cet effet, l'invention a pour objet un système d'accès à un véhicule automobile, équipé d'au moins un identifiant à télécommande destiné à être porté par un utilisateur, et d'un dispositif d'identification installé dans le véhicule, un échange à distance de données entre le dispositif d'identification et chaque identifiant étant apte à s'établir pour commander des moyens de verrouillage des ouvrants du véhicule, lorsque le dispositif d'identification a authentifié l'identifiant, caractérisé par le fait que l'identifiant à télécommande comporte en mémoire au moins une séquence prédéterminée d'appui sur les touches de la télécommande, pour déclencher l'émission par ledit identifiant d'un signal d'inhibition qui est destiné à être reçu et mémorisé par le dispositif d'identification, pour inhiber au moins un identifiant authentique autre que celui qui a émis le signal d'inhibition.

Avantageusement, l'identifiant à télécommande comporte en mémoire une séquence qui est apte à déclencher l'émission d'un signal d'inhibition pour inhiber tous les identifiants autres que celui qui a émis le signal d'inhibition.

Selon une autre caractéristique, l'identifiant à télécommande comporte en mémoire une séquence propre à chaque identifiant, pour émettre un signal d'inhibition comportant un code de repérage de l'identifiant à inhiber, afin d'inhiber uniquement l'identifiant ainsi repéré.

Selon encore une autre caractéristique de l'invention, l'identifiant à télécommande comporte en mémoire plusieurs séquences distinctes, pour émettre plusieurs signaux d'inhibition aptes à inhiber un autre identifiant vis-à-vis de l'accès et/ou du démarrage du véhicule, respectivement.

Dans un mode de réalisation particulier, le signal d'inhibition est émis en radiofréquence par l'identifiant à télécommande, et reçu par un récepteur radiofréquence du dispositif d'identification. En variante, le dialogue entre l'identifiant et le dispositif d'identification peut s'effectuer en basse fréquence.

Avantageusement, l'identifiant à télécommande comporte en mémoire une séquence prédéterminée d'appui sur les touches de la télécommande, pour déclencher l'émission par ledit identifiant d'un signal d'activation qui est destiné à être reçu par le dispositif d'identification, afin d'effacer l'ordre d'inhibition de la mémoire du dispositif d'identification.

Avantageusement, le véhicule automobile comporte sur une portière avant ou à proximité de celle-ci un organe extérieur de commande des moyens de verrouillage du véhicule, et le dispositif d'identification du véhicule comporte en mémoire les mêmes séquences prédéterminées que l'identifiant à télécommande, pour que l'actionnement dudit organe suivant lesdites séquences provoque directement la mémorisation de l'ordre d'inhibition correspondant dans le dispositif d'identification. Ainsi, il est possible de bloquer les identifiants associés au véhicule, même lorsqu'on ne possède pas un tel identifiant.

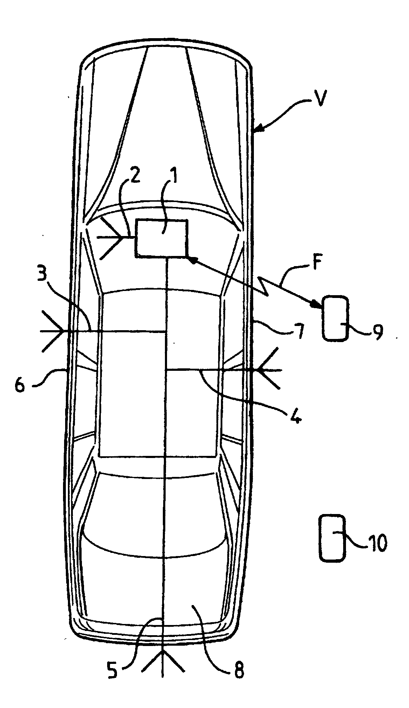

Pour mieux faire comprendre l'objet de l'invention, on va en décrire maintenant, à titre d'exemple purement illustratif et non limitatif, un mode de réalisation représenté sur le dessin annexé. Ce dessin comporte une figure unique représentant schématiquement en vue de dessus un véhicule automobile équipé du système selon l'invention.

Sur cette figure, on a représenté un véhicule automobile V qui comporte une unité électronique de gestion principale 1 incorporant un moyen d'identification et reliée à une pluralité d'antennes 2 à 5. L'antenne 2 est agencée à l'intérieur de l'habitacle du véhicule et présente une zone de couverture qui s'étend sensiblement dans tout l'habitacle. Les antennes 3 et 4 sont extérieures à l'habitacle du véhicule et situées par exemple, dans les poignées de portières latérales 6, 7. L'antenne 5 est également extérieure à l'habitacle et s'étend vers l'arrière du véhicule, sensiblement au niveau du hayon de coffre 8. Le moyen d'identification comporte un émetteur en basse fréquence et un récepteur en radiofréquence, pour permettre d'échanger les données avec plusieurs identifiants, par exemple les identifiants 9, 10. L'antenne intérieure 2 est reliée au récepteur radiofréquence.

L'identifiant 9 porté par le conducteur du véhicule est incorporé dans un boîtier à télécommande, qui comporte plusieurs touches ou boutons de sélection, pour déclencher par exemple l'émission d'un signal transmettant un ordre de verrouillage/déverrouillage des ouvrants du véhicule. Cette transmission d'informations est représentée par la double flèche F.

Si l'on suppose qu'un autre identifiant 10 est perdu ou en possession d'une personne non autorisée, l'utilisateur portant le boîtier 9 peut inhiber l'identifiant 10, en actionnant les boutons de télécommande. Par exemple, si une séquence d'appui sur les différentes touches de la télécommande est effectuée, par exemple un coup bref sur une touche suivi de deux coups longs sur une autre touche, l'identifiant envoie, en basse fréquence ou en haute fréquence, un signal d'inhibition qui est reçu par l'unité centrale 1, cette dernière mémorisant l'information relative à l'inhibition portée par ledit signal d'inhibition. Le signal d'inhibition peut comporter un ordre d'inhibition à l'accès de tous les identifiants autres que celui qui a émis le signal d'inhibition, ou bien le signal d'inhibition peut porter un code de repérage de l'identifiant à inhiber, ou bien encore le signal d'inhibition peut distinguer l'inhibition vis-à-vis de l'accès au véhicule ou du démarrage du véhicule.

A cet effet, plusieurs séquences d'appui prédéterminées sur les touches de la télécommande sont mémorisées sur l'identifiant 9.

Bien que l'invention ait été décrite en liaison avec une variante de réalisation particulière, il est bien évident qu'elle n'y est nullement limitée et qu'elle comprend tous les équivalents techniques des moyens décrits ainsi que ses combinaisons, si celles-ci entrent dans le cadre de l'invention comme défini dans les revendications.

## Revendications

1. Système d'accès à un véhicule automobile (V), équipé d'au moins un identifiant à télécommande (9;10) destiné à être porté par un utilisateur, et d'un dispositif d'identification (1) installé dans le véhicule, un échange à distance de données entre le dispositif d'identification (1) et chaque identifiant (9;10) étant apte à s'établir pour commander des moyens de verrouillage des ouvrants (6-8) du véhicule, lorsque le dispositif d'identification (1) a authentifié l'identifiant (9;10), **caractérisé par le fait que** l'identifiant à télécommande (9) comporte en mémoire au moins une séquence prédéterminée d'appui sur les touches de la télécommande, pour déclencher l'émission par ledit identifiant (9) d'un signal d'inhibition qui est destiné à être reçu et mémorisé par le dispositif d'identification (1), pour inhiber au moins un identifiant authentique (10) autre que celui qui a émis le signal d'inhibition.

2. Système selon la revendication 1, **caractérisé par le fait que** l'identifiant à télécommande (9) comporte en mémoire une séquence qui est apte à déclencher l'émission d'un signal d'inhibition pour inhiber tous les identifiants (10) autres que celui qui a émis le signal d'inhibition.

3. Système selon la revendication 1 ou 2, **caractérisé par le fait que** l'identifiant à télécommande (9) comporte en mémoire une séquence propre à chaque identifiant (10), pour émettre un signal d'inhibition comportant un code de repérage de l'identifiant à inhiber, afin d'inhiber uniquement l'identifiant ainsi repéré.

4. Système selon l'une des revendications 1 à 3, **caractérisé par le fait que** l'identifiant à télécommande (9) comporte en mémoire plusieurs séquences distinctes, pour émettre plusieurs signaux d'inhibition aptes à inhiber un autre identifiant (10) vis-à-vis de l'accès et/ou du démarrage du véhicule, respectivement.

5. Système selon l'une des revendications 1 à 4, **caractérisé par le fait que** le signal d'inhibition est émis en radiofréquence par l'identifiant à télécommande (9), et reçu par un récepteur radiofréquence du dispositif d'identification (1).

6. Système selon l'une des revendications 1 à 5, **caractérisé par le fait que** l'identifiant à télécommande (9) comporte en mémoire une séquence prédéterminée d'appui sur les touches de la télécommande, pour déclencher l'émission par ledit identifiant d'un signal d'activation qui est destiné à être reçu par le dispositif d'identification (1), afin d'effacer l'ordre d'inhibition de la mémoire du dispositif d'identification.

7. Système selon l'une des revendications 1 à 6, **caractérisé par le fait que** le véhicule automobile comporte sur une portière avant (6, 7) ou à proximité de celle-ci, un organe extérieur de commande des moyens de verrouillage du véhicule, et le dispositif d'identification (1) du véhicule comporte en mémoire les mêmes séquences prédéterminées que l'identifiant à télécommande (9), pour que l'actionnement dudit organe suivant lesdites séquences provoque directement la mémorisation de l'ordre d'inhibition correspondant dans le dispositif d'identification.

## Patentansprüche

1. Zugangssystem zu einem Kraftfahrzeug (V), ausgestattet mit zumindest einem Fernbedienungsidentifizierer (9; 10), der zum Mitführen durch den Benutzer bestimmt ist, und mit einer im Fahrzeug eingebauten Identifikationsvorrichtung (1), wobei ein Datenaustausch über eine Entfernung zwischen der Identifikationsvorrichtung (1) und jedem Identifizierer (9; 10) erfolgen kann, um Mittel zum Verriegeln der Fahrzeugtüren (6 - 8) zu betätigen, wenn die Identifikationsvorrichtung (1) den Identifizierer (9; 10) authentifiziert hat, **dadurch gekennzeichnet, dass** der Fernbedienungsidentifizierer (9) zumindest eine vorbestimmte Folge zum Drücken der Tasten der Fernbedienung eingespeichert hat, um die Ausgabe eines Hemmsignals vom Identifizierer (9) auszulösen, das dazu bestimmt ist, von der Identifikationsvorrichtung (1) empfangen und gespeichert zu werden, um zumindest einen authentischen Identifizierer (10) zu hemmen, außer demjenigen, der das Hemmsignal ausgegeben hat.

2. System nach Anspruch 1, **dadurch gekennzeichnet, dass** der Fernbedienungsidentifizierer (9) eine Folge eingespeichert hat, welche die Ausgabe eines Hemmsignals auslösen kann, um sämtliche Identifizierer (10) zu hemmen, außer demjenigen, der das Hemmsignal ausgegeben hat.

3. System nach Anspruch 1 oder 2, **dadurch gekennzeichnet, dass** der Fembedienungsidentifizierer (9) eine Folge eingespeichert hat, die jedem Identifizierer (10) zueigen ist, um ein Hemmsignal auszugeben, das einen Code zum Bezeichnen des zu hemmenden Identifizierers enthält, um nur den so bezeichneten Identifizierer zu hemmen.

4. System nach einem der Ansprüche 1 bis 3, **dadurch gekennzeichnet, dass** der Fernbedienungsidentifizierer (9) mehrere verschiedene Folgen eingespeichert hat, um mehrere Hemmsignale auszugeben, die jeweils einen anderen Identifizierer (10) bezüglich Zugang und/oder Starten des Fahrzeugs hemmen.

5. System nach einem der Ansprüche 1 bis 4, **dadurch gekennzeichnet, dass** das Hemmsignal mit Radiofrequenz vom Fernbedienungsidentifizierer (9) ausgebeben wird und von einem Radiofrequenzempfänger der Identifikationsvorrichtung (1) empfangen wird.

6. System nach einem der Ansprüche 1 bis 5, **dadurch gekennzeichnet, dass** der Fernbedienungsidentifizierer (9) eine vorbestimmte Folge zum Drücken der Tasten der Fernbedienung eingespeichert hat, um die Ausgabe eines Aktivierungssignals vom genannten Identifizierer auszulösen, das dazu bestimmt ist, von der Identifikationsvorrichtung (1) empfangen zu werden, um den Hemmbefehl aus dem Speichers der Identifikationsvorrichtung zu löschen.

7. System nach einem der Ansprüche 1 bis 6, **dadurch gekennzeichnet, dass** das Kraftfahrzeug an einer Vordertür (6, 7) bzw. in deren Nähe ein äußeres Glied zum Betätigen der Verriegelungsmittel des Fahrzeugs enthält und die Identifikationsvorrichtung (1) des Fahrzeugs die gleichen vorbestimmten Folgen wie der Fernbedienungsidentifizierer (9) eingespeichert hat, damit die Betätigung des genannten Glieds gemäß der genannten Folgen direkt die Speicherung des entsprechenden Hemmbefehls in der Identifikationsvorrichtung bewirkt.

## Claims

1. Access system for a motor vehicle (V), equipped with at least one remote control identifier (9, 10) intended to be carried by a user, and an identification device (1) installed in the vehicle, a remote exchange of data between the identification device (1) and each identifier (9, 10), which can be configured to control the means of locking the openings (6-8) of the vehicle, when the identification device (1) has authenticated the identifier (9, 10), **characterised in that** the remote control identifier (9) holds in memory at least one predetermined sequence on the remote control keys to trigger emission by the said identifier (9) of an inhibiting signal which is intended to be received and stored by identification device (1), to inhibit at least one other device (10) other than that which has emitted the inhibiting signal.

2. System as in Claim 1, **characterised in that** the remote control identifier (9) has in memory a sequence which is able to trigger emission of an inhibiting signal to inhibit all identifiers (10) other than that which has emitted the inhibiting signal.

3. System as in Claim 1 or Claim 2, **characterised in that** the remote control identifier (9) has in memory a sequence appropriate to each identifier (10), to emit an inhibiting signal including a marker code for the identifier to be inhibited, in order to inhibit only the identifier thus marked.

4. System as in any of Claims 1 to 3, **characterised in that** the remote control identifier (9) has in memory a number of distinct sequences, to emit a number of inhibiting signals able to inhibit another identifier (10) from accessing and/or starting the vehicle respectively.

5. System as in any of Claims 1 to 4, **characterised in that** the inhibiting signal is emitted by the remote control identifier (9) at radio frequency and is received by a radio frequency receiver in the identification device (1).

6. System as in any of Claims 1 to 5, **characterised in that** the remote control identifier (9) has in memory a predetermined keying sequence on the remote control, to trigger emission of an activation signal which is intended to be received by the identification device (1), in order to cancel the inhibiting order in the identification device's memory.

7. System as in any of Claims 1 to 6, **characterised in that** the motor vehicle has, on a front door (6, 7) or in the latter's vicinity, an external contrivance to control the means of locking the vehicle, and the identification device (1) in the vehicle has stored the same predetermined sequences as the remote control identifier (9), in order that activating the said contrivance following the said sequences will directly trigger storage of the relevant inhibiting order in the identification device.
